# EUROPÄISCHE PATENTANMELDUNG

(11) **EP 1 863 169 A2**
(43) Veröffentlichungstag der Anmeldung: **05.12.2007**
(21) Anmeldenummer: 07102626.4
(22) Anmeldetag: 19.02.2007
(51) Int. Cl.: H02P 29/00

(54) **Elektrischer Antrieb mit einem elektronischen Leistungsdatenspeicher**

(30) Priorität: 02.06.2006 DE 102006025976
(71) Anmelder: SIEMENS AKTIENGESELLSCHAFT, 80333 München (DE)
(72) Erfinder: Hellinger, Leopold, 3710, Ziersdorf (AT); Neumann, Gerhard, 3231, St. Margarethen (AT); Ulrich, Jens, 98704, Langewiesen (DE)
(74) Vertreter: Berg, Peter

(57) **Zusammenfassung**

Elektrische Antriebsvorrichtung, umfassend
- eine elektrische Maschine,
- eine elektronische Steuereinrichtung,
- eine elektrische Anschlussvorrichtung, mittels derer die elektrische Maschine an die Steuereinrichtung angeschlossen ist,
dadurch gekennzeichnet,
- dass eine Speichereinrichtung vorgesehen ist, welche der elektrischen Maschine örtlich zugeordnet ist und welche Leistungsdaten der Antriebsvorrichtung enthält, die bei einer Inbetriebnahme der Steuereinrichtung von der Speichereinrichtung über die Anschlussvorrichtung an die Steuereinrichtung übertragbar sind.

## Beschreibung

### Technisches Gebiet

Die Erfindung betrifft einen elektrischen Antrieb mit einer elektrischen Maschine, einer Steuereinrichtung und eine Anschlussvorrichtung, mittels derer die elektrische Maschine an die Steuereinrichtung angeschlossen ist.

### Stand der Technik

In verschiedenen Bereichen der elektrischen Antriebstechnik, insbesondere bei Maschinen die eine hohe Zahl angetriebener Achsen aufweisen, werden Antriebe eingesetzt, bei denen die Steuerungsaufgaben nicht mehr von einer zentralen Steuerung ausgeführt werden, sondern durch mehrere dezentrale Steuerungen. Ein Beispiel für derartige Maschinen sind Transferstraßen, Verpackungsmaschinen oder Maschinen der Fördertechnik.

Eine dezentrale Steuerung besteht im Wesentlichen aus einem Stromrichter, z.B. einem Umrichter und einer elektronischen Steuerschaltung, die in ein Kommunikationsnetz eingebunden sein kann. Ein dezentrales Antriebskonzept hat den Vorteil, dass der Aufwand für die elektrische Verbindungstechnik verglichen mit einer zentralen Steuerung geringer ist. Zum anderen vereinfacht sich der Wartungsaufwand, da schadhafte Steuermodule schnell ausgetauscht werden können.

Häufig werden bei derartigen Maschine so genannte Kompaktantriebe eingesetzt, das sind Antriebe bei denen die elektronischen Baukomponenten mit dem Elektromotor eine bauliche Einheit bilden, d.h. der Umrichter und die elektronische Steuerung sind in einem Gehäuse untergebracht, das direkt auf dem Elektromotor aufmontiert ist.

Fällt im Betrieb der Umrichter und/oder die Steuereinrichtung aus, so braucht das schadhafte Modul nur gewechselt zu werden. Mit dem mechanischen Austausch eines Moduls ist aber die Maschine noch nicht einsatzbereit. Der Umrichter muss erst mit den Leistungsdaten der elektrischen Maschine und ggf. weiteren Antriebsparametern parametriert werden. Für dieses Parametrieren ist bislang geschultes Servicepersonal erforderlich. Der Wartungsaufwand ist trotz der Modulbauweise des Kompaktantriebs noch immer hoch.

### Darstellung der Erfindung

Es ist eine Aufgabe der vorliegenden Erfindung eine elektrische Antriebsvorrichtung zu schaffen, so dass der Wartungsaufwand bei einer Maschine mit einer hohen Achszahl geringer ist.

Diese Aufgabe wird durch eine elektrische Antriebsvorrichtung mit den Merkmalen des Patentanspruchs 1 gelöst. Vorteilhafte Ausgestaltungen der Erfindung sind Gegenstand von abhängigen Patentansprüchen.

Die Erfindung schlägt eine elektrische Antriebsvorrichtung vor, bei der einem Elektromotor eine elektronische Speichereinrichtung zugeordnet und zu diesem örtlich nahe angeordnet ist, d.h. diese Speichereinrichtung kann im oder am Gehäuse des elektrischen Energiewandlers angeordnet sein, oder sie kann sich in unmittelbarer Nähe ortsfest zur Maschine in einem eigenen Gehäuse befinden. Die Speichervorrichtung enthält Kenndaten der Antriebsvorrichtung. Darunter sind zunächst Informationen zu verstehen, wie sie üblicherweise in den Feldern am Leistungsschild einer elektrischen Maschine gemäß DIN 42 961 oder EN 60034-1:2004 angegeben sind. Darüber hinaus können auch Parmameter enthalten sein, wie sie für die Antriebsaufgabe vor Ort ausschlaggebend sind. Wenn nun im Störungsfall die elektronische Steuereinrichtung ausgetauscht werden muss, ist es nach dem Wechsel nicht mehr erforderlich, dass vor Ort Parameter neu eingegeben werden müssen. Wenn bei der Fehlerbehebung das neue Steuerungsmodul angeschlossen ist, sind bereits die Voraussetzungen für ein automatisches Parametrieren gegeben: Das Steuermodul holt sich unmittelbar nach der Inbetriebsetzung automatisch die in der Speichereinrichtung gespeicherten Informationen. Ein aufwändiges Parametrieren durch ein speziell geschultes Bedienpersonal ist nicht mehr erforderlich. Die ausgefallene Achse der Maschine ist vergleichsweise schnell wieder verfügbar. Der Fehler kann einfach durch den mechanischen Austausch des schadhaften Umrichters bzw. der Steuerung behoben werden. Für diese Arbeit ist kein geschultes Personal des Herstellers der elektrischen Antriebsvorrichtung erforderlich, sondern der Wechsel kann durch eine Hilfskraft des Betreibers der übergeordneten Maschine selbst durchgeführt werden. Durch die Erfindung lässt sich insbesondere bei Maschinen, die über eine hohe Achszahl verfügen, der Aufwand für Wartung und Service entscheidend verringern.

Eine bevorzugte Ausgestaltung der Erfindung kann dadurch gekennzeichnet sein, dass die Speichereinrichtung auf einem, an der elektrischen Maschine befestigten Schaltungsträger angeordnet ist. Der Schaltungsträger kann beispielsweise im Bereich der Anschlussklemmen mittels Schrauben am Stator befestigt sein, wodurch die Speichereinrichtung zum integralen Bestandteil des Energiewandlers wird. Da die Speichereinrichtung Informationen enthält, die üblicherweise auf dem Leistungsschild des Energiewandlers angegeben sind, fungiert sie als "elektronisches Leistungsschild". Dieses "elektronische Leistungsschild" hat den Vorteil, dass im Servicefall die zur Neukonfiguration der ausgefallenen Antriebseinheit erforderlichen Informationen vor Ort elektronisch verfügbar sind. Im Störungsfall entfällt das bislang erforderliche aufwändige manuelle Parametrieren.

Um eine schadhafte Steuereinrichtung möglichst schnell auswechseln zu können, kann es günstig sein, wenn die Anschlussvorrichtung eine Steckvorrichtung umfasst. Der Austausch im Wartungsfall ähnelt dann einem Plug-and-Play: ein neu aufgestecktes Steuermodul ist unmittelbar nach dem Wechsel betriebsbereit. Hierbei empfiehlt es sich, dass das maschinenseitige Steckerteil der Steckvorrichtung, das signalleitend mit der Speichereinrichtung verbunden ist, direkt an der elektrischen Maschine, z.B. durch Schrauben am Gehäuse oder am Stator, befestigt ist. Im Wartungsfall kann die elektronische Steuereinrichtung mittels eines korrespondierenden steuerungsseitigen Steckerteils einfach aufgesteckt werden.

Hinsichtlich eines begrenzten Bauvolumens kann es günstig sein, wenn das maschinenseitige Steckerteil direkt auf dem Schaltungsträger angeordnet ist.

Eine besonders kompakte Bauform lässt sich insbesondere dann erreichen, wenn das maschinenseitige Steckerteil und der Schaltungsträger in einem Gehäuse untergebracht ist und das Gehäuse auf der elektrischen Maschine direkt aufmontiert ist.

Mit Vorteil ist das Gehäuse gleichzeitig das Anschlussgehäuse des Energiewandlers.

Um die Wärmebelastung der elektronischen Baukomponenten der Steuereinrichtung möglichst gering zu halten kann es günstig sein, wenn die Steuereinrichtung als Deckelteil dieses Gehäuses ausgebildet ist. Durch diese Anordnung ist die Steuereinrichtung von der elektrischen Maschine thermisch entkoppelt.

In einer bevorzugten Ausführungsform ist die Speichereinrichtung ein Festspeicher. Dadurch bleiben die Leistungsdaten der Maschine bzw. des Antriebs unabhängig von einer Energieversorgung gespeichert; mit anderen Worten, die zur Neukonfiguration einer Achse erforderliche Information bleibt vor Ort auch dann vorhanden, wenn der Elektromotor vom Netz getrennt ist bzw. der Umrichter abgesteckt ist.

Als Festspeicher können verschiedene Speichertypen zum Einsatz kommen. Bevorzugt wird ein Festspeicher der vielfach wieder beschreibbar ist. Dies kann mit Vorteil durch einen elektrisch beschreibbaren und löschbaren Halbleiterspeicher, wie einem EEPORM erfolgen. Damit ist ein fortlaufendes Update ortspezifischer Antriebsparameter möglich. Ein ausgewechseltes Modul verwendet die aufgabenbezogenen Parameter des Vorgängermoduls. In einer besonders bevorzugten Ausführung ist vorgesehen, dass der Festspeicher ein serielles EEPROM ist. Derartige miniaturisierte Speicherbausteine sind besonders kostengünstig.

Zur weiteren Senkung der Herstellungskosten bietet sich an, für den Schaltungsträger das vorhandene Klemmenbrett der elektrischen Maschine zu verwenden.

Es kann zweckmäßig sein, wenn auf dem Klemmenbrett neben der Steckvorrichtung auch die Anschlussklemmen für die Wicklungen des Motors angeordnet sind.

Eine platzsparende Ausführung kann dadurch gekennzeichnet sein, dass die Steckvorrichtung als Federleiste ausgebildet ist und am Klemmenbrett befestigt ist.

### Kurzbeschreibung der Zeichnungen

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung zu entnehmen sind. Es zeigen:
- Figur 1: ein Ausführungsbeispiel der erfindungsgemäßen Antriebsvorrichtung, welche eine rotierende elektrische Maschine mit darauf aufmontiertem Gehäuse zeigt, dessen Gehäusedeckel abgehoben ist;

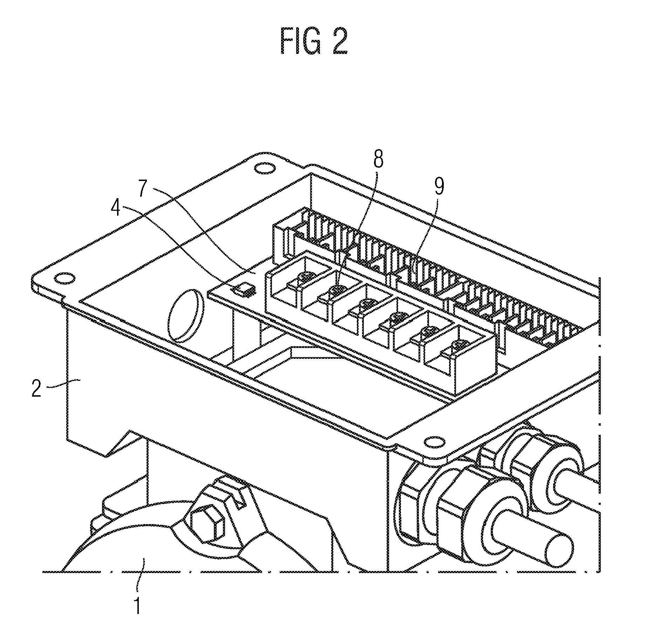

- Figur 2: eine Detaildarstellung der Figur 1 mit Blick in das Innere des Gehäuses, in welchem der elektronische Festspeicher zu sehen ist;
- Figur 3: eine Blockdarstellung der erfindungsgemäßen elektrischen Antriebsvorrichtung.

### Ausführung der Erfindung

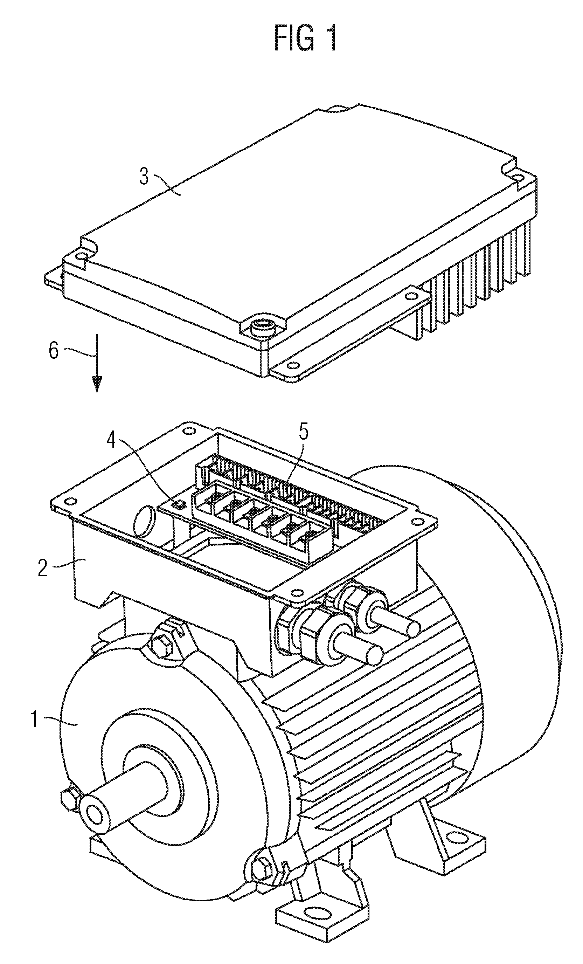

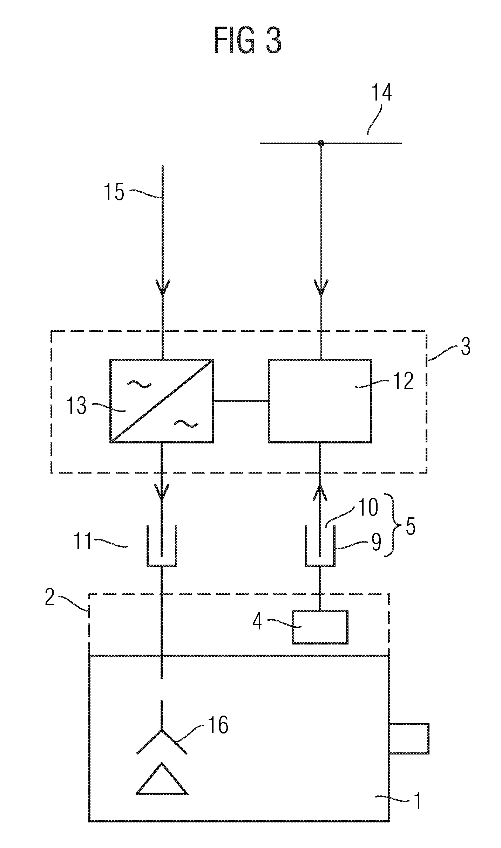

In der Figur 1 ist eine erfindungsgemäße Ausführung der elektrischen Antriebsvorrichtung dargestellt. In einem Gehäuse 2, das das Anschlussgehäuse einer elektrischen Maschine 1 ist, ist die Anschlussvorrichtung 5 zu sehen. Die Anschlussvorrichtung besteht im Wesentlichen aus einer Steckvorrichtung mit Verbindungsleitungen. Die elektrische Maschine 1 ist vorliegend ein Elektromotor in Kompaktbauweise, wie er in den eingangs genannten Anwendungen eines dezentralen Antriebssystems einer nicht näher dargestellten Maschine mit hoher Achszahl üblicher weise eingesetzt wird. Die Steckvorrichtung 5 ist so ausgebildet, dass die in abgehobener Darstellung in Figur gezeigte Steuereinrichtung 3 in Richtung des Pfeils 6 aufgesteckt werden kann. Im aufgesteckten Zustand bildet sie ein Deckelteil des Gehäuses 2 und die Steckkontakte der Steuereinrichtung 3 (in Figur 1 nicht zu sehen) sind mit korrespondierenden motorseitigen Steckkontakten verbunden. Wie aus der Blockdarstellung in Figur 3 zu sehen ist, besteht die Steuereinrichtung 3 aus einem (Wechselstrom-) Umrichter 13 und einer elektronischen Steuerschaltung 12. Der Umrichter 13 wird von einer Energiequelle 15 versorgt. Über eine Kontaktiervorrichtung 11 ist der Umrichter 13 an die Wicklungen 16 des Motors 1 steckbar angeschlossen. Die elektrische Verbindung zwischen der Steuerschaltung 12 und einer Speichervorrichtung 4 ist über die Steckerteile 9,10 der Anschlussvorrichtung 5 hergestellt. Die Steuerschaltung 12 ist über einen Bus 14 in ein Kommunikationsnetz eingebunden.

Die Speichervorrichtung 4 ist vorliegend ein Festspeicher, der auf einem Schaltungsträger 7 (hier der Anschlussträgerplatte oder Klemmenbrett des Motors 1) angeordnet ist. Der nicht flüchtige Speicher 4 ist als EEPROM ausgebildet. Bei der Fertigung des Motors 1 wir das EEPROM 4 mit Leistungsdaten beschrieben, die üblicherweise auf dem DIN42961-Leistungsschild des Motors angegeben sind. Der Speicher 4 enthält also Informationen wie Nennspannung, Nennstrom, Betriebsart, Leistungsfaktor, Nenndrehzahl etc. Das EEPROM 4 kann während des Betriebs elektrisch mit Parametern der Antriebsvorrichtung parametriert werden.

Im Folgenden wird das Parametrieren der elektrischen Antriebsvorrichtung erläutert:

Bei der Inbetriebsetzung der Antriebsvorrichtung, die auch vor Ort am Motor erfolgen kann, wird die als Steckmodul ausgebildete Steuereinrichtung 3 (gemäß Pfeil 6 in Figur 1) auf das Gehäuse 2 aufgesteckt. Nach dem Aufstecken und Einschalten der Steuereinrichtung 3 liest die elektronische Steuerschaltung 12 die Informationen aus dem Festspeicher 4. Nach dieser Datenübertragung befinden sich die Kenndaten des Elektromotors 1 nicht nur im Speicher 4 sondern auch in der elektronischen Steuerschaltung 12. Diese weiß die für die leistungselektronische Ansteuerung erforderlichen Kenndaten des Energiewandlers. Eine erste Phase des Parametrierens ist damit abgeschlossen.

In einer zweiten Phase wird bei der Inbetriebnahme der Antriebsvorrichtung, beispielsweise von einem Servicetechniker des Herstellers der Antriebsvorrichtung, die für den Einsatzort beim Kunden relevanten Leistungsdaten des Antriebs wie beispielsweise Drehzahl, Hochlaufzeiten, Bremsprofil, maximale Bremsströme etc. parametriert. Eine Parameterliste, wie sie für derartige Kompaktantriebe typisch ist, kann beispielsweise der Anwender-Dokumentation 6SE6400-5CE00-0AP0 der Antriebsvorrichtung "Combimaster/Micromaster", Ausgabe 03/02 der Siemens AG entnommen werden. Nach Abschluss der Inbetriebnahme werden diese Parameter des Antriebs ebenfalls in den Festspeicher 4 geschrieben. Während des Betriebs dienen die Leistungsdaten des Motors zusammen mit den auf den Anwendungsfall bezogenen Parametern des Antriebs der Steuereinrichtung 3 dazu, die an sie gestellte Antriebsaufgabe vor Ort zu erfüllen; gleichzeitig sind diese Informationen im Festwertspeicher 4 gepuffert.

Fällt nun beispielsweise eine Steuereinrichtung 3 aus, so wird einfach das defekte Modul 3 abgenommen und ein neues Modul aufgesteckt. Dieses neue Modul kennt aber weder die Leistungsdaten der zu steuernden elektrischen Maschine 1 noch die für die Antriebsaufgabe vor Ort relevanten Parameter. Gemäß der Erfindung liest die ausgewechselte Steuereinrichtung 3 aus dem Festspeicher 4 des Energiewandlers 1 die Parameter seines Vorgängers und setzt sich seine Parameter selbstständig. Mit anderen Worten, die Antriebsvorrichtung rekonstruiert den Parametersatz vor Ort selbstständig und ist damit schnell wieder verfügbar. Es ist nicht mehr erforderlich, dass beim Austausch eines Stromrichters Servicepersonal der Antriebsvorrichtung erscheinen muss. Im Störungsfall einer Steuereinrichtung beschränkt sich die Wartungsarbeit auf den Austausch des schadhaften Moduls. Dieser Austausch ist einfach und kann durch eine Hilfskraft des Betreibers selbst durchgeführt werden.

### Zusammenstellung der verwendeten Bezugszeichen

- 1: Motor
- 2: Gehäuse, Anschlussgehäuse
- 3: Steuereinrichtung, Umrichter
- 4: Speichereinrichtung, Festspeicher
- 5: Anschlussvorrichtung, Steckvorrichtung
- 6: Pfeil
- 7: Schaltungsträger, Klemmenbrett
- 8: Anschlussklemmen
- 9: maschinenseitiges Steckerteil
- 10: steuerungsseitiges Steckerteil
- 11: Kontaktiervorrichtungen
- 12: elektronische Steuerschaltung
- 13: Stromrichter
- 14: Bus
- 15: Energieversorgung
- 16: Wicklung

## Patentansprüche

1. Elektrische Antriebsvorrichtung, umfassend
- eine elektrische Maschine (1),
- eine elektronische Steuereinrichtung (3),
- eine elektrische Anschlussvorrichtung (5), mittels derer die elektrische Maschine (1) an die Steuereinrichtung (3) angeschlossen ist,
**dadurch gekennzeichnet,**
- **dass** eine Speichereinrichtung (4) vorgesehen ist, welche der elektrischen Maschine (1) örtlich zugeordnet ist und welche Leistungsdaten der Antriebsvorrichtung enthält, die bei einer Inbetriebnahme der Steuereinrichtung (3) von der Speichereinrichtung (4) über die Anschlussvorrichtung (5) an die Steuereinrichtung (3) übertragbar sind.

2. Elektrische Antriebsvorrichtung nach Anspruch 1, **dadurch gekennzeichnet, dass** die Speichereinrichtung (4) auf einem Schaltungsträger (7) angeordnet ist, der bezüglich des Stators der elektrischen Maschine (1) ortsfest angeordnet ist.

3. Elektrische Antriebsvorrichtung nach Anspruch 1 oder 2, **dadurch gekennzeichnet, dass** die Anschlussvorrichtung (5) eine Steckvorrichtung umfasst, welche ein maschinenseitiges Steckerteil (9) aufweist, das mit der Speichereinrichtung (4) signalleitend verbunden ist, und ein steuerungsseitiges Steckerteil (10) aufweist, das mit der Steuereinrichtung (3) signalleitend verbunden ist.

4. Elektrische Antriebsvorrichtung nach Anspruch 2 und 3, **dadurch gekennzeichnet, dass** das maschinenseitige Steckerteil (9) auf dem Schaltungsträger (7) angeordnet ist.

5. Elektrische Antriebsvorrichtung nach Anspruch 4, **dadurch gekennzeichnet, dass** das maschinenseitige Steckerteil (9) und der Schaltungsträger (7) in einem Gehäuse (2) untergebracht sind und dieses Gehäuse (2) auf dem Gehäuse der elektrischen Maschine (1) aufmontiert ist.

6. Elektrische Antriebsvorrichtung nach Anspruch 5, **dadurch gekennzeichnet, dass** das Gehäuse (2) ein Deckelteil aufweist und die Steuereinrichtung (3) dieses Decketeil bildet.

7. Elektrische Antriebsvorrichtung nach einem der Ansprüche 1 bis 6, **dadurch gekennzeichnet, dass** die Speichereinrichtung (4) ein Festspeicher ist.

8. Elektrische Antriebsvorrichtung nach Anspruch 7, **dadurch gekennzeichnet dass** der Festspeicher (4) ein vielfach wieder beschreibbarer Speicher, insbesondere ein durch elektrische Signale speicherbarer und löschbarer Halbleiterspeicher (EEPROM) ist.

9. Elektrische Antriebsvorrichtung nach Anspruch 8, **dadurch gekennzeichnet, dass** im Festspeicher (4) neben Leistungsdaten der elektrischen Maschine (1), welche auf dem Leistungsschild der elektrischen Maschine angegeben sind, auch Parameter gespeichert sind, die auf die Anwendung der Antriebsvorrichtung bezogen sind.

10. Elektrische Antriebsvorrichtung nach Anspruch 9, **dadurch gekennzeichnet, dass** der Schaltungsträger (7) durch das Klemmenbrett der elektrischen Maschine (1) gebildet ist.

11. Elektrische Antriebsvorrichtung nach Anspruch 10, **dadurch gekennzeichnet, dass** die Steuereinrichtung (3) einen Stromrichter (13) und eine elektronische Steuerschaltung (12) enthält und dass die Steckeinrichtung (5) eine Kontaktiervorrichtungen (11) aufweist, mittels derer der Stromrichter (13) mit den Wicklungen (16) der elektrischen Maschine (1) verbunden ist.

12. Elektrische Antriebsvorrichtung nach Anspruch 11, **dadurch gekennzeichnet, dass** die Steckvorrichtung (5) als Federleiste ausgebildet ist die auf dem Klemmenbrett befestigt ist.

13. Elektrische Antriebsvorrichtung nach Anspruch 11, **dadurch gekennzeichnet, dass** die Steuerungselektronik (12) an eine Bus (14) angeschlossen und in ein Kommunikationsnetz eingebunden ist.
